# EUROPEAN PATENT APPLICATION

(11) **EP 4 571 531 A1**
(43) Date of publication of application: **18.06.2025**
(21) Application number: 24219427.2
(22) Date of filing: 12.12.2024
(51) Int. Cl.: G06F 16/3331, G06F 16/334

(54) **SYSTEMS AND METHODS FOR MULTI-USER LARGE LANGUAGE MODEL EXECUTION**

(30) Priority: 15.12.2023 US 202318541030
(71) Applicant: Google LLC, Mountain View, CA 94043 (US)
(72) Inventor: SHIN, Dongeek, Mountain View, 94043 (US)
(74) Representative: Betten & Resch

(57) **Abstract**

Disclosures are provided for execution of large-language models (LLMs), including systems and methods that allow for increased multi-user efficiency within an execution framework. For example, LLM queries provided by a plurality of users of an LLM may be combined together into a batched prompt that can be received by an LLM. In addition, the LLM receiving the batched prompt may be configured to provide an output that is segmented in accordance with each user's query. Configuration of the LLM may include providing the LLM with prompt-engineering inputs in connection with the batched prompt.

## Description

A large language model (LLM) can be designed to display conversational intelligence in a number of contexts involving user interactions. However, current implementations of LLMs come with one or more drawbacks in connection with the LLM's size, latency, complexity, and energy consumption. These drawbacks only increase with the number of users, making LLMs difficult to operate efficiently at large scales.

### BRIEF SUMMARY

What is needed are improved systems and methods of LLM implementation in a multi-user setting. Disclosures are provided herein that provide for increased multi-user LLM efficiency within an execution framework that allows for at least some LLM queries to be combined as a batched prompt. For example, in accordance with the current disclosure queries can be provided by a plurality of users of an LLM, and these queries may be combined together into a batched prompt that can be received by an LLM. In addition, the LLM receiving the batched prompt may be configured to provide an output that is segmented in accordance with each user's query. Configuration of the LLM may include providing the LLM with prompt-engineering inputs in connection with the batched prompt. The prompt-engineering inputs may be designed to allow the LLM to produce an output that is easily and accurately segmented in accordance with the plurality of queries contained within the batched prompt. In addition, the prompt-engineering inputs may allow for the LLM to more efficiently process the batched prompt, such as by providing the LLM with information regarding one or more batching parameters.

In accordance with aspects of the disclosure, a system for large language model (LLM) execution may comprise one or more processors having access to one or more memories, wherein the one or more processors are configured to: identify a plurality of LLM queries from a plurality of users for inclusion as part of a batched prompt; generate the batched prompt from the plurality of LLM queries and one or more prompt-engineering inputs; provide the one or more prompt-engineering inputs and the batched prompt to an LLM; receive an output from the LLM that is based on the batched prompt; generate, from the output, a plurality of responses corresponding to the plurality of users; and provide a corresponding response, from the plurality of responses, to each of the plurality of users.

In accordance with other aspects of the disclosure, the one or more processors may be further configured to determine that the plurality of LLM queries share one or more batching parameters. In addition, the one or more batching parameters may comprise at least one of a temporal parameter, a spatial parameter, and a subject-matter parameter. A temporal parameter may comprise the plurality of LLM queries having timestamps that are within a predefined amount of time from one another. A spatial parameter may comprise the plurality of LLM queries having location metadata within a predefined region.

In accordance with yet other aspects of the disclosure, the one or more prompt-engineering inputs may identify the batched prompt as including queries from a plurality of users. In addition, the one or more prompt-engineering inputs may include one or more segmentation-related instructions for the LLM to structure the output in a manner that allows for segmentation of the output in connection with each of the plurality of users. The segmentation instructions may include instructions that allow for portions of the output to be associated with one or more user identifiers from the plurality of users.

In accordance with still other aspects of the disclosure, the one or more processors may be configured to identify the plurality of LLM queries to be combined based on a determination that an LLM-query threshold has been reached.

In accordance with other aspects of the disclosure, the one or more processors may be further configured to provide the batched prompt as tokenized input, and wherein the tokenized input identifies overlap between one or more terms within the plurality of LLM queries.

In accordance with aspects of the disclosure, a method for executing an LLM may include: identifying, by one or more processors a plurality of LLM queries from a plurality of users for inclusion as part of a batched prompt; generating, by the one or more processors, the batched prompt from the plurality of LLM queries and one or more prompt-engineering inputs; providing, by the one or more processors, the one or more prompt-engineering inputs and the batched prompt to an LLM; receiving, by the one or more processors, an output from the LLM that is based on the batched prompt; generating, from the output, by the one or more processors, a plurality of responses corresponding to the plurality of users; and providing, by the one or more processors, a corresponding response, from the plurality of responses, to each of the plurality of users.

In accordance with aspects of the disclosure, the method may further comprise determining that the plurality of LLM queries share one or more batching parameters. The one or more batching parameters may include at least one of a temporal parameter, a spatial parameter, and a subject-matter parameter. A temporal parameter may include the plurality of LLM queries having timestamps that are within a predefined amount of time from one another. A spatial parameter may include the plurality of LLM queries having location metadata within a predefined region.

In accordance with still other aspects of the disclosure, one or more prompt-engineering inputs may identify the batched prompt as including the plurality of LLM queries. The one or more prompt-engineering inputs may include one or more segmentation instructions for the LLM to structure the output in a manner that allows for segmentation of the output in connection with each of the plurality of users. The segmentation instructions may include instructions to incorporate user identifiers within the output for each of the plurality of users.

In accordance with yet other aspects of the disclosure, the method may include providing the batched prompt as tokenized input, and wherein the tokenized input identifies overlap between one or more terms within the plurality of LLM queries.

### BRIEF DESCRIPTION OF THE DRAWINGS

Figure 1 is a block-diagram of an LLM system according to aspects of the disclosure.
Figure 2 is a block-diagram of an LLM system that is operating in a non-batching mode of operation.
Figure 3 is a block-diagram of an LLM system that is operating in a batching mode of operation.
Figure 4 is a flow-diagram of operations according to aspects of the disclosure.

### DETAILED DESCRIPTION

Disclosed systems and methods herein provide for improved LLM execution in which LLMs can be implemented more efficiently within multi-user settings. LLMs are often implemented in the context of human-computer conversational interactions. However, within a standard LLM, each user is served by a particular LLM inference that is executed to service that particular user's queries. This can be seen as a direct LLM pipeline, in that the queries of a single user are provided directly to a particular LLM inference. Thus, in order to service a plurality of users simultaneously, a plurality of LLM inferences are mirrored on one or more servers, with each LLM inference executing independently of the other parallel LLM inferences. In addition, the number of users being serviced by a typical LLM system will correspond to the number of LLM inferences that are currently being executed, in that for any N number of users that are presenting queries at a given time, an N number of parallel LLM inferences would be executed in order to service the plurality of users in a conversational or real-time manner. In order to service a large number of users simultaneously, typical LLM systems must choose between implementing a large number of parallel LLM inferences, or providing LLM responses with latencies. The former option is expensive and has high energy consumption, while the latter option degrades the users' experience.

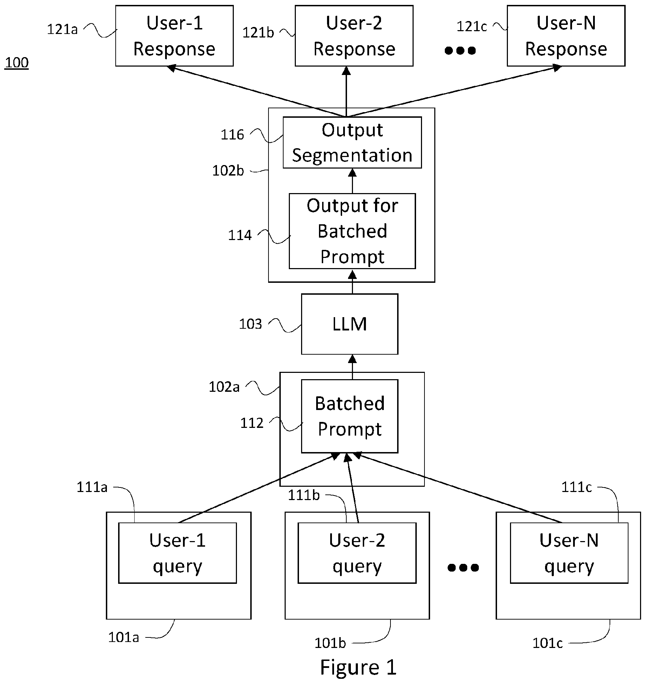

In accordance with aspects of the disclosure, systems and methods are provided that allow for multiple users to submit queries to a single LLM inference, while allowing each user to receive a response that is specifically directed to that user's query. For example, Figure 1 is a block diagram of a system 100 in which queries 111a-c from a plurality of user devices 101a-c are processed together by an LLM inference 103. In connection with processing the queries 111a-c, system 100 may include one or more computing devices, such as servers, that each contain one or more processors. For example, computing device 102a may be configured to identify received queries 111a-c and combine or batch the queries 111a-c into a batched prompt 112. The batched prompt 112 can be generated by combining the plurality of queries 111a-c into a series of text in which each paragraph within the text constitutes a different query from the plurality of queries 111a-c. System 100 also includes an LLM inference 103 that is configured to process the batched prompt in accordance with a particular large language model and provide an output 114 based on the batched prompt 112. Output 114 can be processed by computing device 102b. This processing can include segmenting output 114 into a plurality of responses 121a-c that correspond to the individual user queries 111a-c and transmitting the plurality of responses 121a-c to the corresponding user devices 101a-c. While computing device 102a, LLM inference 103, and computing device 102b appear in Figure 1 as separate devices, they may each be configured as part of the same device. For example, each may appear within a single server, or two components, such as computing devices 102a and 102b may be present on a first server, while LLM inference 103 is present on a second server that is remote from the first server. In addition, user devices 101a-c may be any computing devices that can be used to submit an LLM query to the system, including personal computers, mobile devices, smartphones, laptops, tablets, and wearable devices. Transmission and receipt of queries 111a-c, batched prompt 112, output 114, and responses 121a-c may occur directly between one or more components of the system or may occur over a network of intermediate devices.

Computing device 102a can be configured to generate one or more prompt-engineering inputs that can be incorporated into the batched prompt 112 or otherwise transmitted to LLM inference 103 in connection with batch prompt 112. The prompt-engineering input can be designed so as to provide the LLM inference 103 with statements regarding the structure of batched prompt 112 and/or with instructions regarding how to process the batched prompt 112 or how to structure the output that is generated from the batched prompt 112. For example, the prompt-engineering input can include a statement that the batched prompt 112 contains multiple queries from different users, and that the LLM's output should independently respond to each of the queries. In addition, the prompt-engineering input can state that the batched prompt 112 has been structured so that each paragraph within the batched prompt 112 is a query from a distinct user. These paragraphs could also be numbered within the batched prompt 112, and the prompt-engineering input could contain instructions for the LLM to provide an output that contains responses in the form of corresponding numbered paragraphs.

In generating batched prompt 112, computing device 102a can be configured to determine whether particular user queries are to be included within a particular batched prompt. This determination can be performed by identifying queries that share one or more batching parameters. A batching parameter can be based on metadata associated with the queries. For example, batching parameters may be based on spatial or temporal data associated with the query, such as location and time-stamp information that is provided within metadata of the queries. In connection with a temporal batching parameter, a determination can be made to identify queries containing time-stamps that are within a particular period of time. For example, all queries received between a time T and time T+δ can be combined into a batched prompt. In connection with a location batching parameter, a determination may be made to identify queries that are within a particular region, such as queries that were made within a particular distance from a predetermined location, or queries that are located within a particular geographic location, such as being within a particular time-zone, state, city, neighborhood, campus, facility, or structure. For example, computing device 102a may identify those queries that have been submitted within a particular sports stadium, and those queries may be included within a particular batched prompt 112. The query may also contain metadata that provides information regarding one or more attributes of the users who are submitting the queries. For example, the query may be submitted from a user account that identifies the user as being within a particular profession or being a member of a particular school or company. This metadata may also be used as a basis for one or more batching parameters.

Batching parameters may also be based on attributes of the queries, including the language, format, and subject matter of the queries. For example, a set of queries may each inquire as to the best color for different items, such as asking the best color for a sports car, the best color for a house, or the best color for an article of clothing. The computing device 102a may be configured to identify the common subject matter between these queries, and generate a batched prompt 112 in which each query is related to the common subject matter. In addition, more than one batching parameter may be used to generate a batched prompt, such as by identifying queries that share a common subject matter and are also submitted from a particular region. For example, batched prompt 112 may be based on queries that relate to a particular sporting event, and which were submitted within a particular distance from the sporting event.

If one or more batching parameters are used to generate batched prompt 112, the prompt-engineering input may include statements or instructions relating to the batching parameters that were used. For example, the prompt-engineering input may include a statement that all queries within the batched prompt 112 were submitted at a particular time and from a particular location and/or the prompt-engineering input may include information regarding the common subject matter of the queries. Such prompt-engineering input may be incorporated into the batched prompt 112, such as appearing as text prior to the set of queries, or the prompt-engineering input may be provided to the LLM inference 103 as a separate transmission, prior to the batched prompt 112 being provided.

Upon receiving the prompt-engineering input and batched prompt 112, LLM inference 103 processes the queries within the batched prompt 112 in accordance with the prompt-engineering input. LLM inference 103 can provide an output 114 that is responsive to the batched prompt 112 in accordance with the prompt-engineering input. Output 114 can be received by computing device 102b and segmented into a plurality of responses that correspond to each of the user queries 111a-c that were incorporated into batched prompt 112. TThe segmentation of output 114 can include determining what portions of output 114 are associated with one or more indicators identifying that portion of output 114 as corresponding to a particular user or a particular user query 111a-c. For example, batched query 112 can be generated so that the plurality of user queries 111a-c appear within the batched prompt 112 as a series of numbered paragraphs, and LLM inference 113 can be instructed via prompt-engineering input to provide an output 114 that is formatted to include responses that appear as numbered paragraphs that directly correspond to each of the numbered paragraphs within the batched prompt 112. In addition, a user hash value may be used in order to generate the batched prompt, and the resulting output may be segmented in accordance with each user hash value, such as by running a natural-language-understanding parser and text segmentation algorithm.

Computing device 102b may segment output 114 into a plurality of responses 121a-c based on the numbered paragraphs within output 114, such as by having each response 121a-c correspond to the content contained within a particular numbered paragraph of output 114. In addition, a user identification can be associated with each numbered paragraph within batched prompt 112 as well as within output 114, allowing computing device 102b to transmit each segmented response 121a-c to an associated user device 101a-c. Each user device 101a-c may therefore receive a particular response from responses 121a-c that corresponds to the user's particular query from the set of user queries 111a-c.

Providing LLM inference 103 with a batched prompt 112 and related prompt-engineering input in the manner disclosed herein allows LLM inference 103 to efficiently generate an output 114 that can be segmented and distributed as a plurality of user responses 121a-c. A single LLM inference 103 is therefore capable of servicing a plurality of users simultaneously, while maintaining a desired quality of response that will be provided to each user. A system using the disclosed batching and segmenting methods may operate in a more efficient manner than standard LLM multi-user systems, including in circumstances in which the system is experiencing high user-traffic.

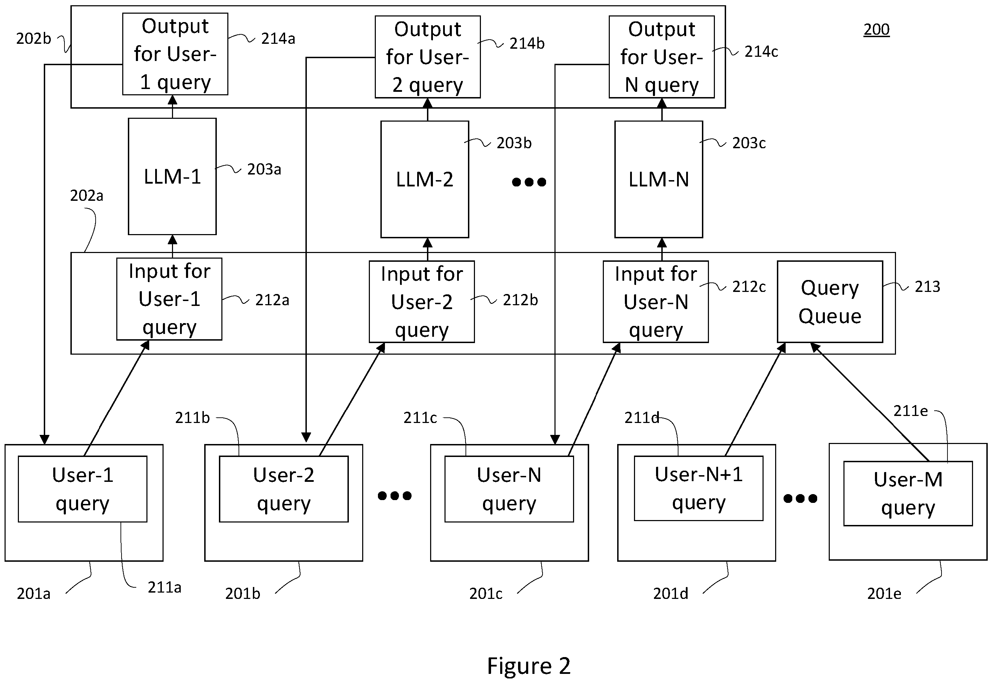

In accordance with aspects of the disclosure, an LLM system may transition between different modes of operation. In a first "non-batching mode" of operation, each user may direct queries to a distinct LLM inference, while in a second "batching mode" of operation, at least some queries from the plurality of users can be combined as part of a batched prompt. For example, Figure 2 is a diagram of system 200 that is operating within a non-batching mode, in that the system is currently configured so that user devices 211a-c are each submitting independent queries 211a-c to individual LLM inferences 203a-c. Within the non-batching mode, system 200 is capable of supporting an N number of LLM inferences, including LLM inferences 203a-cAccordingly in the non-batching mode of operation, an N number of users, such as user devices 211a-c, can be simultaneously served by system 200, with each LLM inference 203a-c generating one of the outputs 214a-c, which are then transmitted via computing device 202b to the corresponding user device 211a-c in response to the queries from that user.

In Figure 2, computing device 202a of system 200 may receive queries from more than an N number of users, including queries 211d-e from user devices 201d-e. In such an instance, computing device 202a may place each query 201d-e from User N+1 to User M into a query queue 213, wherein each query within the queue will remain until one of the N number LLM inferences 203a-c are made available. However, the queueing of queries 211d-e can produce latencies in query response times, especially in instances in which the M number of users greatly exceeds the N number of available LLM inferences. Computing device 202a may therefore be configured to determine whether the number of pending user queries 211a-e exceeds some predetermined batching threshold, and if so, computing device 202a may transition from a non-batching mode of operation to a batching mode of operation. This batching threshold may be based on the total number of users attempting to transmit queries at any given time, or may be based on the number of users relative to the number of available LLM inferences 203a-c. The batching threshold may also be based on the amount of time one or more user queries 211d-e have remained within query queue 213.

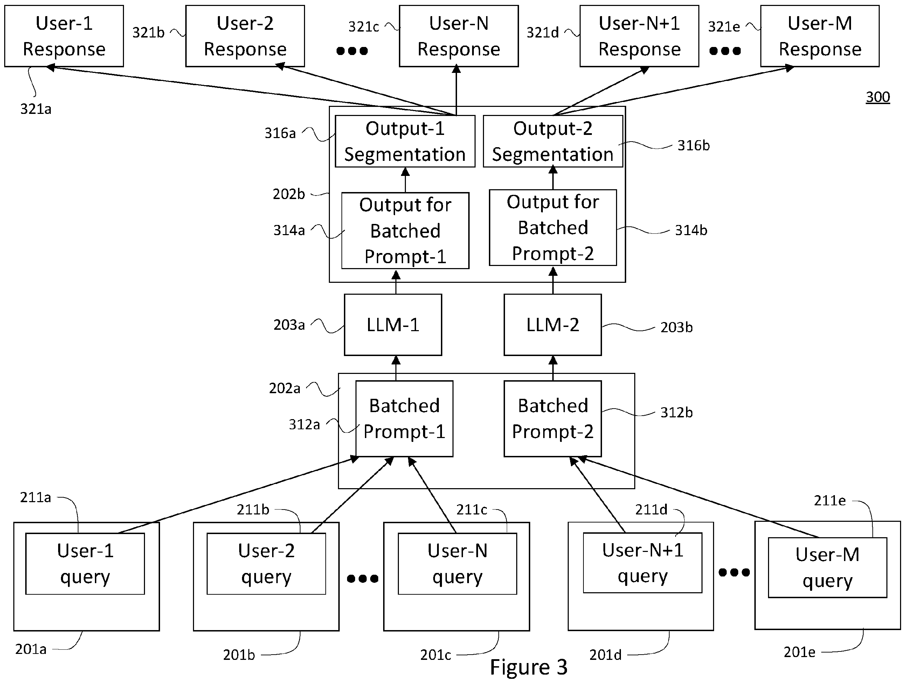

In Figure 3, computing device 202a has determined that a batching threshold has been met, and system 200 has transitioned to a batching mode of operation. Under this batching mode, system 200 can generate one or more batched prompts that combine queries from multiple users. For example, computer device 202a has generated two batched prompts, with user queries 211a-c being incorporated into batched prompt 312a and user queries 211d-e being incorporated within batched prompt 312b. Computing device 202a may apply a plurality of batching parameters in order to identify which user queries 21 1a-e are to be batched together, and the generation of the two batched prompts 312a-b may be based on different sets of batching parameters. For example, batched prompt 312a may be based on an identification that user queries 211a-c contain a timestamp within a particular period of time and also have geographic metadata indicating that the queries originated from a first geographic region, while user queries 211d-e may be determined to share some common subject matter and have geographic metadata indicating that the queries originated from a second geographic region.

Computing device 202a is configured to transmit batched prompts 312a and 312b to LLM inferences 203a and 203b, respectively, with each batched prompt 312a-b including its own prompt-engineering input. For example, batched prompt 312a may include a prompt-engineering input that indicates the temporal and geographic location data that is shared by all of the queries that have been included in batched prompt 312a, including queries 211a-c. In addition, batched prompt 312b may include prompt-engineering input that indicates the shared subject matter and geographic location for queries 211d-e. Based on the received batched prompt 312a-b, each LLM inference 203a and 203b produces an output 314a and 314b, respectively. As disclosed herein, the output 314a and 314b may each be formatted in accordance with prompt-engineering inputs so as to be efficiently segmented into plurality of user responses 321a-e. As provided in Figure 3, computing device 202b may segment ouput 316a into user responses 321a-c and transmit each user response 321a-c to a corresponding user device 201a-c. In addition, computing device 202b may segment output 316b into user responses 321d-e and transmit each user response 321d-e to a corresponding user device 201d-e. While Figure 3 provides for user queries 211a-e being batched into two separate batched prompts 312a and 312b, all user queries 211a-e may be batched into a single batched prompt.

When operating in the batching mode of operation, system 200 is capable of servicing queries for greater number of users, and may do so while using fewer LLM inferences. For example, in Figure 2, system 200 is only capable of simultaneously servicing an N number of users while executing an N number of LLM inferences. However, within the batching mode shown in Figure 3, system 200 is capable of simultaneously service additional user devices 201d-e, and this may be done with fewer LLM inferences, such as by using only two LLM inferences 203a and 203b. The batching mode of operation may therefore allow for a system to achieve greater efficiencies of scale.

In addition to avoiding potential latencies and bottlenecks associated with a lack of LLM inference availability, the batching mode of operation may also reduce overall computational complexity and energy consumption, even in instances in which such bottlenecks do not exist. Many LLMs operate as a transformer decoder, with multi-head attention layers, position-wise feed forward layers, as well as add & norm layers. In decoding a particular text input, the LLM inference will assign particular self-attention and convolution values to portions of the input. Increased efficiency can occur in connection with providing the LLM with a batched prompt that is provided as a pre-fill tokenized input that allows for overlaps in context of terms the queries to be identified and used for a plurality of queries within the batched prompt. For example, if each query within a batched prompt shares a particular subject matter of asking for the "best color" for various items, the self-attention values for the term "color" within the plurality of queries that make up the batched prompt will be the same or similar to one another. The system may provide the LLM inference with a batched prompt in which one or more self-attention values for tokens associated with each query do not need to be recalculated individually for every query within the batched prompt. Thus, a similarity between the queries contained in the batched prompt can allow the LLM inference to more efficiently process the batched prompt, when compared to processing each query individually. In addition, increased efficiency can be realized by including statements within the prompt-engineering input that identify one or more similarities between all of the queries within the batched prompt, thereby defining particular context for all of the queries when the LLM begins processing the batched prompt.

In some instances, a plurality of users may submit the same, or nearly the same, query to the system within a short period of time. For example, if breaking news is occurring regarding a particular person or event, many users may nearly simultaneously submit the same query of "Who is [Person's Name]?" or "Where is [Name of a Place]?" or "What is [Particular Thing]?". In this instance, the batching of queries may provide for increased efficiencies, as the duplicative queries can be identified and provided once to an LLM inference within a batched prompt. For example, returning to Figure 3, computing device 202a may identify if some of the queries 211a-c are duplicative of one another, and combine those duplicative queries within the batched prompt 312a. In combining these duplicative queries together, batched prompt 312a can be configured so that it will only present one instance of the duplicative queries to the LLM inference 203a. However, this one instance will be associated with the multiple users that submitted the duplicative query, so that when the LLM output 314a is segmented, computing device 202b will be able to transmit a copy of the same response 321 to each user that submitted the duplicative query.

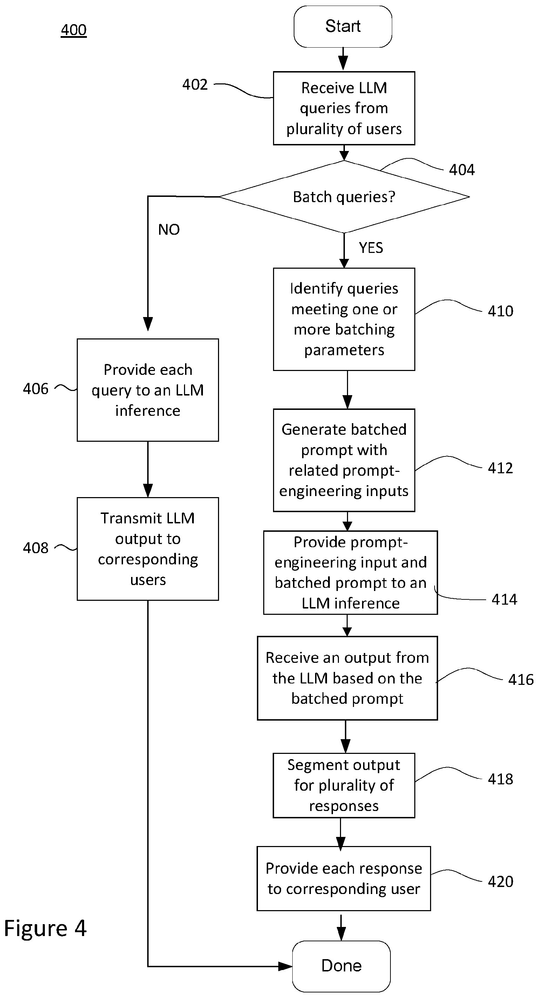

Figure 4 is a flow diagram 400 with operations that can be performed by systems disclosed herein. For example, one or more servers, or other computing devices, may be configured to perform operations in connection with flow diagram 400. While flow diagram 400 presents operations as occurring in a particular order, some operations may be performed in a different order and/or simultaneously in accordance with aspects of the disclosure. In addition, one or more operations may be added or omitted in accordance with aspects of the disclosure. In block 402, LLM queries are received from a plurality of users. These queries can take the form of text that the user is submitting in order to receive a response from the LLM. In block 404, a determination can be made as to whether at least some subset of the plurality of queries should be batched. This determination may be based on whether the system is to operate within a batching or non-batching mode of operation. For example, the system may be configured to enter a batching mode of operation based on user traffic, such as the rate at which LLM queries are being received reaching a predefined threshold or based on the number of available LLM inferences. If user traffic is below one or more thresholds, the system may proceed in accordance with a non-batching mode of operation, in which each LLM query that has been received is transmitted a particular LLM inference (block 406), and the output of each LLM inference is transmitted back to the corresponding user device (block 408).

However, if it is determined, based on user traffic or other factors, that the system is to operate in a batching mode (block 404), the system may identify queries that are to be combined into a batched prompt, such as by identifying queries that meet one or more batching parameters (block 410). For example, the batching parameters may be based on metadata, such as temporal and spatial information, or may be based on the format and subject matter of each query. A batched prompt can be generated from the set of identified queries, as well as prompt-engineering inputs that are to be provided to an LLM inference with the batched prompt (block 412). As discussed herein, the prompt-engineering inputs may include information regarding the plurality of queries that make up the batched prompt and provide instructions on how to generate an output in response to the batched prompt. The prompt-engineering input and batched prompt is provided to an LLM inference to be processed in accordance with the LLM inference's configurations (block 414). An output based on the batched prompt is received from the LLM inference (block 416). The output of the LLM inference is segmented into a plurality of responses (block 418), and a response is provided to each user in accordance with that user's particular query (block 420). Segmentation may be performed, in part, based on the LLM's output being formatted in accordance with the prompt-engineering input. For example, the LLM inference can be instructed, via a prompt-engineering input, to generate an output in the form of numbered paragraphs, and each paragraph number can be associated with a particular user or user query. Completion of flow diagram 400 may complete one round of a query-and-response interface.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples. Further, the same reference numbers in different drawings can identify the same or similar elements.

## Claims

1. A method for large language model, LLM, execution comprising:
identifying, by one or more processors a plurality of LLM queries from a plurality of users for inclusion as part of a batched prompt;
generating, by the one or more processors, the batched prompt from the plurality of LLM queries and one or more prompt-engineering inputs;
providing, by the one or more processors, the one or more prompt-engineering inputs and the batched prompt to an LLM;
receiving, by the one or more processors, an output from the LLM that is based on the batched prompt;
generating, from the output, by the one or more processors, a plurality of responses corresponding to the plurality of users; and
providing, by the one or more processors, a corresponding response, from the plurality of responses, to each of the plurality of users.

2. The method of claim 1, further comprising determining, by the one or more processors, that the plurality of LLM queries share one or more batching parameters.

3. The method of claim 2, wherein the one or more batching parameters comprise at least one of a temporal parameter, a spatial parameter, and a subject-matter parameter.

4. The method of claim 3, wherein the temporal parameter comprises the plurality of LLM queries having timestamps that are within a predefined amount of time from one another.

5. The method of claim 3, wherein the spatial parameter comprises the plurality of LLM queries having location metadata within a predefined region.

6. The method of one of claims 1 to 5, wherein the one or more prompt-engineering inputs identifies the batched prompt as including the plurality of LLM queries.

7. The method of one of claims 1 to 6, wherein the one or more prompt-engineering inputs comprise one or more segmentation instructions for the LLM to structure the output in a manner that allows for segmentation of the output in connection with each of the plurality of users.

8. The method of claim 7, wherein the segmentation instructions comprise instructions to incorporate user identifiers within the output for each of the plurality of users.

9. The method of one of claims 1 to 8, further comprising identifying, by the one or more processors, the plurality of LLM queries to be combined based on a determination that an LLM-query threshold has been reached.

10. The method of one of claims 1 to 9, wherein the batched prompt is provided as tokenized input, and wherein the tokenized input identifies overlap between one or more terms within the plurality of LLM queries.

11. A data processing system comprising one or more processors configured to perform the method of any proceeding claim.
